# FASCICULE DE BREVET EUROPEEN

(11) **EP 2 639 860 B1**
(45) Date de publication et mention de la délivrance du brevet: **28.12.2016**
(21) Numéro de dépôt: 13158009.4
(22) Date de dépôt: 06.03.2013
(51) Int. Cl.: H01M 4/04, H01M 10/0525, H01M 4/133, H01M 4/1391, H01M 4/136, H01M 4/1393, H01M 4/1397, H01M 4/62, H01M 4/1399

(54) **Anode pour cellule de batterie lithium-ion, son procédé de fabrication et cette batterie l'incorporant**
Anode für Lithiumionen-Batterie, ihre Herstellungsmethode und Batterie diese enthaltend
Anode for lithium ion battery, its fabrication procedure et the battery including it

(30) Priorité: 13.03.2012 FR 1252252
(43) Date de publication de la demande: 18.09.2013
(73) Titulaire: HUTCHINSON, 75008 Paris (FR)
(72) Inventeur: VOILLEQUIN, Baptiste, 77590 BOIS-LE-ROI (FR); AYME-PERROT, David, 68330 HUNINGUE (FR); DUFOUR, Bruno, 77430 CHAMPAGNE SUR SEINE (FR); SONNTAG, Philippe, 77210 AVON (FR)
(74) Mandataire: Gevers & Orès

(56) Documents cités:
- EP-A1- 1 489 673
- DE-A1- 10 118 639
- US-A1- 2004 121 232

## Description

La présente invention concerne une anode utilisable dans une cellule de batterie lithium-ion, un procédé de fabrication de cette anode et une batterie lithium-ion dont la ou les cellules incorporent cette anode.

Il existe deux sortes principales de batteries d'accumulateurs au lithium : les batteries lithium métal, où l'électrode négative est composée de lithium métallique (matériau qui pose des problèmes de sécurité lorsqu'en présence d'un électrolyte liquide), et les batteries lithium-ion, où le lithium reste à l'état ionique.

Les batteries lithium-ion sont constituées d'au moins deux électrodes faradiques conductrices de polarités différentes, l'électrode négative ou anode et l'électrode positive ou cathode, électrodes entre lesquelles se trouve un séparateur qui est constitué d'un isolant électrique imbibé d'un électrolyte aprotique à base de cations Li+ assurant la conductivité ionique. Les électrolytes utilisés dans ces batteries lithium-ion sont usuellement constitués d'un sel de lithium par exemple de formule LiPF₆, LiAsF₆, LiCF₃SO₃ ou LiClO₄ qui est dissous dans un mélange de solvants non aqueux tels que l'acétonitrile, le tétrahydrofuranne ou le plus souvent un carbonate par exemple d'éthylène ou de propylène.

La matière active de l'anode d'une batterie lithium-ion est typiquement constituée de graphite (capacité de 370 mAh/g et potentiel redox de 0,05V par rapport au couple Li⁺/Li), ou en variante d'oxydes métalliques mixtes parmi lesquels on recense les oxydes de titane lithiés de formule Li₄Ti₅O₁₂, Li_{X}TiO₂, ou encore de composés par exemple de formule LiₓCuVO₄, LiₓSnO₂, LiₓMoO₂, LiₓMoS₂, avec 0<x<5. Ces matières actives d'anode sont le siège d'une insertion/désinsertion réversible de lithium à des potentiels électrochimiques généralement plus élevés que celui du graphite.

La matière active de la cathode d'une batterie lithium-ion est usuellement constituée d'un oxyde d'un métal de transition tel qu'un oxyde de vanadium, de nickel, de manganèse ou de cobalt, ou en variante d'un phosphate de fer lithié.

Les matières actives respectives de l'anode et de la cathode d'une batterie lithium-ion permettent une insertion/désinsertion réversible de lithium dans ces électrodes, et plus la fraction massique des matières actives y est élevée, plus la capacité des électrodes est grande. Ces électrodes doivent également contenir un composé conducteur électrique, tel que du noir de carbone et, pour leur conférer une cohésion mécanique suffisante, un liant polymérique. Une batterie lithium-ion est ainsi basée sur l'échange réversible de l'ion lithium entre l'anode et la cathode lors de la charge et la décharge de la batterie, et elle possède une haute densité d'énergie pour une masse très faible grâce aux propriétés physiques du lithium.

Les anodes de batteries lithium-ion sont le plus souvent fabriquées par un procédé comprenant successivement une étape de dissolution ou de dispersion des différents ingrédients de l'anode dans un solvant, une étape d'étalement de la solution ou dispersion obtenue sur un collecteur métallique de courant, puis enfin une étape d'évaporation de ce solvant.

Les procédés de fabrication d'anodes de batteries lithium-ion qui utilisent un solvant organique présentent de nombreux inconvénients dans les domaines de l'environnement et de la sécurité. En particulier, il est dans ce cas nécessaire d'évaporer des quantités importantes de tels solvants qui sont toxiques ou inflammables.

Quant aux procédés qui utilisent un solvant aqueux pour fabriquer ces anodes, leur inconvénient majeur est que l'anode doit être séchée de manière très poussée avant de pouvoir être utilisée, les traces d'eau étant connues pour limiter la durée de vie utile des accumulateurs au lithium. On peut par exemple citer le document EP-B1-1 489 673 pour la description d'un procédé de fabrication d'une anode à base de graphite, d'un liant élastomère et utilisant un solvant aqueux.

Il est donc hautement souhaitable de préparer des anodes pour batteries lithium-ion qui soient fabriquées sans utilisation de solvants. C'est dans ce contexte que des procédés de fabrication d'anodes pour batterie lithium-ion par des techniques de mise en oeuvre en voie fondue (par exemple par extrusion) ont été décrits dans la littérature.

Malheureusement, ces procédés par voie fondue génèrent des difficultés majeures dans le cas des batteries lithium-ion, qui requièrent de manière connue une fraction massique de matière active dans le mélange polymérique de l'anode d'au moins 85 % pour que celle-ci présente une capacité suffisante au sein de la batterie lithium-ion. Or, à de tels taux de matière active, la viscosité du mélange polymérique d'anode devient très élevée et entraîne des risques de sur-échauffement du mélange et de perte de cohésion mécanique après sa mise en oeuvre.

Le document US-B2-6 939 383 décrit l'extrusion d'une composition polymérique comprenant un copolymère poly(éthylène oxyde)-poly(propylène oxyde)-poly(glycidyl éther) à titre de polymère conducteur ionique, pour la mise en oeuvre sans solvant d'une anode ou cathode de batterie lithium-polymère. Cependant, la fraction massique de matière active dans l'unique composition polymérique préparée dans ce document est seulement de 64,5 % et concerne en outre une cathode.

Le document US-A-5 749 927 présente un procédé de préparation en continu par extrusion de batteries lithium-polymère, qui comprend un mélangeage de la matière active d'anode ou de cathode avec un conducteur électrique et une composition d'électrolyte solide comprenant un polymère, un sel de lithium et un mélange carbonate de propylène / carbonate d'éthylène en large excès par rapport à ce polymère. Dans ce document, la fraction massique de matière active présente dans la seule composition polymérique d'anode obtenue est également inférieure à 70 %.

Ainsi, un inconvénient majeur de ces procédés connus de fabrication par voie fondue d'anodes pour accumulateurs lithium est que les fractions massiques de matière active dans la composition polymérique d'anode demeurent insuffisantes pour l'obtention d'une anode de haute performance spécifiquement pour batterie lithium-ion.

Un but de la présente invention est donc de concevoir un procédé de fabrication d'une anode qui remédie à l'ensemble des inconvénients précités, et ce but est atteint en ce que la Demanderesse vient de découvrir d'une manière surprenante que si l'on mélange à chaud par voie fondue et sans évaporation de solvant une matière active et des additifs comprenant une matrice élastomère réticulable, une charge électriquement conductrice et un composé organique non volatil (i.e. présentant un point d'ébullition supérieur à 150° C à la pression atmosphérique de 1,013 10⁵ Pa), alors on obtient après réticulation une composition polymérique d'anode qui est utilisable dans une batterie lithium-ion à électrolyte à base d'un sel de lithium et d'un solvant non aqueux avec une fraction de cette matière active dans la composition nettement supérieure à celles obtenues à ce jour par voie fondue et avantageusement égale ou supérieure à 85 % et avec ce(s) composé(s) organique(s) qui est(sont) avantageusement utilisé(s) comme solvant de cet électrolyte.

Une anode selon l'invention, utilisable dans une cellule de batterie lithium-ion à électrolyte à base d'un sel de lithium et d'un solvant non aqueux, est ainsi à base d'une composition polymérique obtenue par voie fondue et sans évaporation de solvant qui est le produit d'une réaction de mélangeage à chaud d'une matière active et d'additifs comprenant un liant polymérique et une charge électriquement conductrice, et l'anode est telle que ce liant est à base d'au moins un élastomère réticulable et que ces additifs comprennent en outre au moins un composé organique non volatil utilisable dans ce solvant d'électrolyte, la composition comprenant la matière active selon une fraction massique avantageusement égale ou supérieure à 85 %.

Encore plus avantageusement, ladite composition peut comprendre ladite matière active selon une fraction massique égale ou supérieure à 90 %, voire égale ou supérieure à 93 %.

On notera que cette fraction massique très élevée de la matière active dans l'anode selon l'invention permet de conférer une performance élevée à la ou à chaque cellule ainsi obtenue et donc à la batterie lithium-ion l'incorporant.

On notera également que la répartition homogène dans la composition dudit au moins un élastomère réticulé permet d'assurer la tenue mécanique de l'anode.

On notera en outre qu'une anode selon l'invention est totalement dépourvue d'eau, contrairement à celles du document EP-B1-1 489 673 précité.

Avantageusement, ladite matière active peut comprendre au moins un composé ou complexe qui est choisi dans le groupe constitué par le graphite, les oxydes de titane lithiés, les composés lithiés de formule LiₓCuVO₄, LiₓSnO₂, LiₓMoO₂, LiₓMoS₂ (avec 0<x<5) et les sulfures métalliques lithiés de type LiVS₂ ou LiTi₂S₂, et qui est de préférence choisi parmi les oxydes de titane lithiés de formule Li₄Ti₅O₁₂ ou LiₓTiO₂.

On notera que l'oxyde de titane lithié Li₄Ti₅O₁₂, qui présente une capacité de 170 mAh/g, présente avantageusement une cyclabilité très élevée due à un changement mineur de volume lors des cycles de charge/décharge (i.e. insertion/désinsertion de Li⁺), une capacité à supporter des vitesses rapides, et une stabilité thermique élevée. De plus, cet oxyde de titane lithié confère aux électrolytes utilisés une stabilité satisfaisante au contact de l'anode qui l'incorpore, grâce à son potentiel redox élevé de 1,5 V par rapport au couple Li⁺/Li, avec une absence d'interphase solide entre l'anode et l'électrolyte.

De préférence, ledit au moins un élastomère est un élastomère diénique réticulé au peroxyde et, à titre encore plus préférentiel, un caoutchouc nitrile hydrogéné (HNBR). Egalement à titre préférentiel, ledit au moins un élastomère peut être présent dans ladite composition selon une fraction massique comprise entre 1 % et 10 %.

Avantageusement, ledit au moins un composé organique non volatil peut comprendre un carbonate, de préférence un carbonate d'au moins une oléfine telle que l'éthylène qui est préférentiellement utilisé dans la composition de l'électrolyte.

On notera que l'utilisation d'un tel carbonate, tel qu'un carbonate d'éthylène, permet avantageusement :
- d'accroître le taux de charges de la composition,
- d'éviter les risques inhérents à la toxicité des composés organiques volatils (COV) utilisés dans les procédés classiques de fabrication d'anodes, du fait que ce carbonate est un produit solide à température ambiante beaucoup moins toxique à manipuler, et
- d'utiliser cette composition polymérique d'anode sans évaporation préalable du carbonate et de faciliter l'intégration de l'électrolyte au sein de l'anode, du fait que ce carbonate est l'un des constituants principaux des électrolytes utilisés à ce jour au sein des batteries lithium-ion.

Egalement avantageusement, ledit au moins un composé organique peut être présent dans ladite composition selon une fraction massique comprise entre 0,1 % et 5 %.

De préférence, le rapport massique composé(s) organique(s) volatil(s) / élastomère réticulé du liant est inférieur à 1.

On notera que l'invention peut permettre d'incorporer les sels nécessaires à l'utilisation de l'anode au cours de son procédé de fabrication.

Selon une autre caractéristique de l'invention, lesdits additifs peuvent comprendre en outre un système de réticulation qui est présent dans la composition selon une fraction massique comprise entre 0,05 % et 0,20 %, et qui comprend de préférence un peroxyde organique et un co-agent de réticulation dans le cas où ledit au moins un élastomère est un élastomère diénique tel qu'un caoutchouc nitrile hydrogéné (HNBR).

Selon une autre caractéristique de l'invention, ladite charge électriquement conductrice peut être choisie dans le groupe constitué par le noir de carbone, le graphite, le graphite expansé, les fibres de carbones, les nanotubes de carbone, le graphène et leurs mélanges, et est présente dans la composition d'anode selon une fraction massique comprise entre 1 % et 6 %.

Un procédé de fabrication selon l'invention d'une anode telle que définie ci-dessus est caractérisé en ce qu'il comprend :
a) un mélangeage par voie fondue et sans aucune évaporation de solvant, dans un mélangeur interne ou une extrudeuse, de ladite matière active et desdits additifs comprenant ledit liant et ledit composé organique à l'état solide pour l'obtention de ladite composition à l'état réticulable, cette matière active comprenant de préférence au moins un composé ou complexe tel que du graphite ou un oxyde de titane lithié, et
b) une réticulation et éventuellement une mise en forme à chaud de cette composition, pour l'obtention de ladite composition réticulée.

Selon une autre caractéristique de l'invention, l'on peut mettre en oeuvre l'étape a) en mélangeant ledit liant à un pré-mélange à l'état de poudre des autres ingrédients de la composition, par exemple à une température comprise entre 80° C et 120° C dans un mélangeur interne.

Selon une autre caractéristique de l'invention, l'on peut mettre en oeuvre l'étape b) par une compression à chaud de ladite composition réticulable.

Avantageusement, ce procédé de l'invention peut comprendre ensuite une étape c) de calandrage de ladite composition réticulée pour la déposer sur un collecteur métallique de courant qui équipe ladite anode.

Une batterie lithium-ion selon l'invention comprend au moins une cellule comportant une anode telle que définie ci-dessus, une cathode et un électrolyte à base d'un sel de lithium et d'un solvant non aqueux.

Selon une autre caractéristique avantageuse de l'invention, ledit solvant d'électrolyte peut comprendre ledit au moins un composé organique non volatil de l'anode.

Selon un autre aspect de l'invention, ladite anode comprend un collecteur métallique de courant mis en contact avec au moins un film constitué de ladite composition polymérique.

Avantageusement, la cathode de cette batterie peut être à base d'une matière active comprenant au moins un composé ou complexe polyanionique lithié ayant une tension de fonctionnement inférieure à 4 V et de préférence revêtu de carbone, tel qu'un phosphate d'un métal M lithié de formule LiMPO₄ où M est par exemple un atome de fer. Encore plus avantageusement, cette cathode peut être obtenue selon le procédé décrit dans la Demande de Brevet FR12 50457 déposée le 17 janvier 2012 au nom de la Demanderesse.

D'autres caractéristiques, avantages et détails de la présente invention ressortiront à la lecture de la description suivante de plusieurs exemples de réalisation de l'invention, donnés à titre illustratif et non limitatif.

### Exemple 1 :

On a préparé dans un mélangeur interne Haacke, à 90° C, une composition polymérique d'anode ayant la formulation suivante, exprimée en fractions massiques (%):

| | |
|---|---|
| Liant HNBR (« Therban 4307 ») | 2,82 |
| Noir de carbone | 2,72 |
| Carbonate d'éthylène | 0,52 |
| Matière active Li₄Ti₅O₁₂ | **93,84** |
| Système de réticulation : | |
| Dicumyl peroxyde | 0,04 |
| Triallyl cyanurate (TAC) | 0,05 |

On a introduit successivement dans ce mélangeur interne les différents composés, d'abord le caoutchouc nitrile hydrogéné à titre d'élastomère diénique réticulable (liant HNBR) puis un pré-mélange sous forme de poudre des autres ingrédients ci-dessus. Après ce mélangeage puis une compression à chaud à 170° C pendant 15 minutes permettant simultanément la réticulation du liant, on a directement obtenu plusieurs électrodes d'épaisseur allant de 0,4 mm à 2 mm aptes à former chacune une anode à l'intérieur d'une cellule de batterie lithium-ion, après dépôt sur un collecteur de courant équipant cette anode.

### Exemple 2 :

On a préparé dans un mélangeur interne Haacke, à 110° C, une autre composition polymérique d'anode à base des mêmes ingrédients que pour l'exemple 1 mais ayant la formulation différente suivante, exprimée en fractions massiques (%):

| | |
|---|---|
| Liant HNBR (« Therban 4307 ») | 8,23 |
| Noir de carbone | 4,15 |
| Carbonate d'éthylène | 1,64 |
| Matière active Li₄Ti₅O₁₂ | **85,69** |
| Système de réticulation : | |
| Dicumyl peroxyde | 0,12 |
| Triallyl cyanurate (TAC) | 0,15 |

On a introduit successivement dans ce mélangeur interne les différents composés, d'abord le caoutchouc nitrile hydrogéné à titre d'élastomère diénique réticulable (liant HNBR) puis un pré-mélange sous forme de poudre des autres ingrédients ci-dessus. Après ce mélangeage puis une compression à chaud à 170° C pendant 15 minutes permettant simultanément la réticulation du liant, on a directement obtenu plusieurs électrodes d'épaisseur allant de 0,4 mm à 2 mm aptes à former chacune une anode à l'intérieur d'une cellule de batterie lithium-ion, après dépôt sur un collecteur de courant équipant cette anode.

### Exemple 3 :

On a préparé dans un mélangeur interne Haacke, à 110°C, une autre composition polymérique d'anode à base d'une autre matière active que celle des exemples 1 et 2 et des mêmes autres ingrédients que pour ces exemples, selon la formulation suivante exprimée en fractions massiques (%) :

| | |
|---|---|
| Liant HNBR (« Therban 4307 ») | 5,17 |
| Noir de carbone | 2,28 |
| Carbonate d'éthylène | 1,19 |
| Matière active (graphite « Timrex KS 6L ») | **91,17** |
| Système de réticulation : | |
| Dicumyl peroxyde | 0,08 |
| Triallyl cyanurate (TAC) | 0,11 |

On a introduit successivement dans ce mélangeur interne les différents composés, d'abord le caoutchouc nitrile hydrogéné à titre d'élastomère diénique réticulable (liant HNBR) puis un pré-mélange sous forme de poudre des autres ingrédients ci-dessus. Après ce mélangeage puis une compression à chaud à 170° C pendant 15 minutes permettant simultanément la réticulation du liant, on a directement obtenu plusieurs électrodes d'épaisseur allant de 0,4 mm à 2 mm aptes à former chacune une anode à l'intérieur d'une cellule de batterie lithium-ion, après dépôt sur un collecteur de courant équipant cette anode.

En référence à ces exemples de réalisation de l'invention, on notera que la fraction massique très élevée (supérieure à 85 %, voire à 90 %) de la matière active dans cette anode permet de conférer une performance élevée à la ou à chaque cellule ainsi obtenue et donc à la batterie lithium-ion l'incorporant.

## Revendications

1. Anode utilisable dans une cellule de batterie lithium-ion à électrolyte à base d'un sel de lithium et d'un solvant non aqueux, l'anode étant à base d'une composition polymérique obtenue par voie fondue et sans évaporation de solvant qui est le produit d'une réaction de mélangeage à chaud d'une matière active et d'additifs comprenant un liant polymérique et une charge électriquement conductrice, **caractérisée en ce que** ledit liant est à base d'au moins un élastomère réticulable et **en ce que** lesdits additifs comprennent en outre au moins un composé organique non volatil utilisable dans ledit solvant d'électrolyte, la composition comprenant ladite matière active selon une fraction massique égale ou supérieure à 85 %.

2. Anode selon la revendication 1, **caractérisée en ce que** ladite composition comprend ladite matière active selon une fraction massique égale ou supérieure à 90 %.

3. Anode selon la revendication 1 ou 2, **caractérisé en ce que** ladite matière active comprend au moins un composé ou complexe qui est choisi dans le groupe constitué par le graphite, les oxydes de titane lithiés, les composés lithiés de formule LiₓCuVO₄, LiₓSnO₂, LiₓMoO₂, LiₓMoS₂ (avec 0<x<5) et les sulfures métalliques lithiés de formule LiVS₂ ou LiTi₂S₂, et qui est de préférence choisi parmi les oxydes de titane lithiés de formule Li₄Ti₅O₁₂ ou LiₓTiO₂.

4. Anode selon une des revendications précédentes, **caractérisée en ce que** ledit au moins un élastomère est un élastomère diénique réticulé au peroxyde, de préférence un caoutchouc nitrile hydrogéné (HNBR).

5. Anode selon une des revendications précédentes, **caractérisée en ce que** ledit au moins un élastomère est présent dans ladite composition selon une fraction massique comprise entre 1 % et 10 %.

6. Anode selon une des revendications précédentes, **caractérisée en ce que** ledit au moins un composé organique comprend un carbonate, de préférence un carbonate d'au moins une oléfine telle que l'éthylène.

7. Anode selon une des revendications précédentes, **caractérisée en ce que** ledit au moins un composé organique est présent dans ladite composition selon une fraction massique comprise entre 0,1 % et 5 %.

8. Anode selon une des revendications précédentes, **caractérisée en ce que** lesdits additifs comprennent en outre un système de réticulation qui est présent dans ladite composition selon une fraction massique comprise entre 0,05 % et 0,20 %, et qui comprend de préférence un peroxyde organique et un co-agent de réticulation dans le cas où ledit au moins un élastomère est un élastomère diénique tel qu'un caoutchouc nitrile hydrogéné (HNBR).

9. Anode selon une des revendications précédentes, **caractérisée en ce que** ladite charge électriquement conductrice est choisie dans le groupe constitué par le noir de carbone, le graphite, le graphite expansé, les fibres de carbones, les nanotubes de carbone, le graphène et leurs mélanges, et est présente dans ladite composition selon une fraction massique comprise entre 1 % et 6 %.

10. Procédé de fabrication d'une anode selon une des revendications précédentes, **caractérisé en ce qu'**il comprend :
a) un mélangeage par voie fondue et sans aucune évaporation de solvant, dans un mélangeur interne ou une extrudeuse, de ladite matière active et desdits additifs comprenant ledit liant et ledit composé organique à l'état solide pour l'obtention de ladite composition à l'état réticulable, cette matière active comprenant de préférence au moins un composé ou complexe tel que du graphite ou un oxyde de titane lithié, et
b) une réticulation et éventuellement une mise en forme à chaud de cette composition, pour l'obtention de ladite composition réticulée, et de préférence **en ce que** l'on met en oeuvre l'étape a) en mélangeant ledit liant à un pré-mélange à l'état de poudre des autres ingrédients de la composition, par exemple à une température comprise entre 80° C et 120° C dans un mélangeur interne.

11. Procédé de fabrication selon la revendication 10, **caractérisé en ce que** l'on met en oeuvre l'étape b) par une compression à chaud de ladite composition réticulable.

12. Procédé de fabrication selon la revendication 10 ou 11, **caractérisé en ce qu'**il comprend ensuite une étape c) de calandrage de ladite composition réticulée pour la déposer sur un collecteur métallique de courant qui équipe ladite anode.

13. Batterie lithium-ion comprenant au moins une cellule comportant une anode, une cathode et un électrolyte à base d'un sel de lithium et d'un solvant non aqueux, **caractérisée en ce que** ladite anode est telle que définie à l'une des revendications 1 à 9, et de préférence **en ce que** ledit solvant d'électrolyte comprend ledit au moins un composé organique non volatil de l'anode.

14. Batterie lithium-ion selon la revendication 13, **caractérisée en ce que** ladite anode comprend un collecteur métallique de courant mis en contact avec au moins un film constitué de ladite composition polymérique.

15. Batterie lithium-ion selon la revendication 13 ou 14, **caractérisée en ce que** ladite cathode est à base d'une matière active comprenant au moins un composé ou complexe polyanionique lithié ayant une tension de fonctionnement inférieure à 4 V et de préférence revêtu de carbone, tel qu'un phosphate d'un métal M lithié de formule LiMPO₄ où M est par exemple un atome de fer.

## Patentansprüche

1. Anode, die in einer Lithium-ion-Batteriezelle mit einem Elektrolyten, basierend auf einem Lithiumsalze und einem nicht wässrigen Lösemittel, verwendet werden kann, wobei die Anode auf einer polymeren Zusammensetzung, erhalten durch Schmelzformung und ohne Verdampfung von Lösemittel, basiert, die das Produkt einer Reaktion des Heißmischens eines aktiven Materials und von Zusatzstoffen ist, umfassend ein polymeres Bindemittel und eine elektrisch leitende Ladung, **dadurch gekennzeichnet, dass** das Bindemittel auf mindestens einem vernetzbaren Elastomer basiert, und dadurch, dass die Zusatzstoffe außerdem mindestens eine nicht flüchtige organische Verbindung umfassen, die im Elektrolytlösemittel verwendet werden kann, wobei die Zusammensetzung das aktive Material in einer Massenfraktion von gleich oder größer als 85 % umfasst.

2. Anode nach Anspruch 1, **dadurch gekennzeichnet, dass** die Zusammensetzung das aktive Material in einer Massenfraktion von gleich oder größer als 90 % umfasst.

3. Anode nach Anspruch 1 oder 2, **dadurch gekennzeichnet, dass** das aktive Material mindestens eine Verbindung oder einen Komplex umfasst, die/der ausgewählt ist aus der Gruppe, bestehend aus Graphit, Lithiumtitanoxiden, Lithiumverbindungen mit der Formel LiₓCuVO₄, LiₓSnO₂, LiₓMoO₂, LiₓMoS₂ (mit 0<x<5) und Lithiummetallsulfiden mit der Formel LiVS₂ oder LiTi₂S₂, und die/der vorzugsweise ausgewählt ist aus den Lithiumtitanoxiden mit der Formel Li₄Ti₅O₁₂ oder LiₓTiO₂.

4. Anode nach einem der vorhergehenden Ansprüche, **dadurch gekennzeichnet, dass** das mindestens eine Elastomer ein peroxid-vernetztes Dienelastomer ist, vorzugsweise ein hydrierter Nitrilkautschuk (HNBR)

5. Anode nach einem der vorhergehenden Ansprüche, **dadurch gekennzeichnet, dass** das mindestens eine Elastomer in der Zusammensetzung in einer Massenfraktion im Bereich zwischen 1 % und 10 % vorhanden ist.

6. Anode nach einem der vorhergehenden Ansprüche, **dadurch gekennzeichnet, dass** die mindestens eine organische Verbindung ein Carbonat umfasst, vorzugsweise ein Carbonat mindestens eines Olefins wie z.B. Ethylen.

7. Anode nach einem der vorhergehenden Ansprüche, **dadurch gekennzeichnet, dass** die mindestens eine organische Verbindung in der Zusammensetzung in einer Massenfraktion im Bereich zwischen 0,1 % und 5 % vorhanden ist.

8. Anode nach einem der vorhergehenden Ansprüche, **dadurch gekennzeichnet, dass** die Zusatzstoffe außerdem ein Vernetzungssystem umfassen, das in der Zusammensetzung in einer Massenfraktion im Bereich zwischen 0,05 % und 0,20 % vorhanden ist, und das vorzugsweise ein organisches Peroxid und ein Vernetzungs-Coagens für den Fall umfasst, dass das mindestens eine Elastomer eine Dienelastomer wie z.B. ein hydrierter Nitrilkautschuk (HNBR) ist.

9. Anode nach einem der vorhergehenden Ansprüche, **dadurch gekennzeichnet, dass** die elektrisch leitende Ladung ausgewählt ist aus der Gruppe, bestehend aus Ruß, Graphit, expandiertem Graphit, Kohlenstofffasern, Kohlenstoffnanoröhrchen, Graphen und seinen Mischungen, und in der Zusammensetzung in einer Massenfraktion im Bereich zwischen 1 % und 6 % vorhanden ist.

10. Verfahren zur Herstellung einer Anode nach einem der vorhergehenden Ansprüche, **dadurch gekennzeichnet, dass** es Folgendes umfasst:
a) ein Mischen durch Schmelzformung und ohne jede Verdunstung von Lösemittel in einer inneren Schmelzvorrichtung oder einem Extruder des aktiven Materials und der Zusatzstoffe, umfassend das Bindemittel und die organische Verbindung in festem Zustand, zum Erhalt der Zusammensetzung in vernetzbarem Zustand, wobei dieses aktive Material vorzugsweise mindestens eine Verbindung oder einen Komplex wie z.B. Graphit oder Lithiumtitanoxid umfasst, und
b) ein Vernetzen und eventuell ein Heißformen dieser Zusammensetzung zum Erhalt der vernetzten Zusammensetzung,
und vorzugsweise dadurch, dass der Schritt a) durch das Mischen des Bindemittels mit einer Vormischung im Pulverzustand der anderen Bestandteile der Zusammensetzung durchgeführt wird, z.B. bei einer Temperatur im Bereich zwischen 80 °C und 120 °C in einer internen Mischvorrichtung.

11. Verfahren nach Anspruch 10, **dadurch gekennzeichnet, dass** Schritt b) durch eine Heißkomprimierung der vernetzbaren Zusammensetzung durchgeführt wird.

12. Verfahren zur Herstellung nach Anspruch 10 oder 11, dadurch gekenntzeichnet, dass es in der Folge einen Schritt c) des Kalandrierens der vernetzten Zusammensetzung umfasst, um sie auf einem metallischen Stromabnehmer abzulegen, der die Anode ausstattet.

13. Lithium-ion-Batterie, umfassend mindestens eine Zelle, aufweisend eine Anode, eine Kathode und einen Elektrolyten basierend auf einem Lithiumsalz und einem nicht wässrigen Lösemittel, **dadurch gekennzeichnet, dass** die Anode derart ist, wie in einem der Ansprüche 1 bis 9 definiert, und vorzugsweise dadurch, dass das Elektrolytlösemittel die mindestens eine nicht flüchtige organische Verbindung der Anode umfasst.

14. Lithium-ion-Batterie nach Anspruch 13, **dadurch gekennzeichnet, dass** die Anode einen metallischen Stromabnehmer umfasst, der mit mindestens einem Film, bestehend aus der Polymerzusammensetzung, in Kontakt gebracht ist.

15. Lithium-ion-Batterie nach Anspruch 13 oder 14, **dadurch gekennzeichnet, dass** die Kathode auf einem aktiven Material basiert, umfassend mindestens eine(n) polyanionische(n) Lithiumverbindung oder -Komplex mit einer Funktionsspannung von weniger als 4 V und vorzugsweise beschichtet mit Kohlenstoff, wie z.B. ein Phosphat eines Lithiummetalls M mit der Formel LiMPO₄, wobei M z.B. ein Eisenatom ist.

## Claims

1. Anode usable in a cell of a lithium-ion battery having an electrolyte based on a lithium salt and a non-aqueous solvent, the anode containing a polymer composition obtained by a melt method without evaporation of solvent which is the product of a reaction of hot mixing of an active material and of additives comprising a polymer binder and an electrically conductive filler, **characterised in that** said binder is based on at least one cross-linkable elastomer and **in that** said additives further comprise at least one non-volatile organic compound usable in said electrolyte solvent, the composition comprising said active material in a mass fraction greater than or equal to 85%.

2. Anode according to claim 1, **characterised in that** said composition comprises said active material in a mass fraction greater than or equal to 90%.

3. Anode according to claim 1 or 2, **characterised in that** said active material comprises at least one compound or complex that is chosen from the group consisting of graphite, the lithiated oxides of titanium, the lithiated compounds having the formula LiₓCuVO₄, LiₓSnO₂, LiₓMoO₂, LiₓMoS₂ (with 0<x<5), and the lithiated metal sulphides having the formula LiVS₂ or LiTi₂S₂, and that is preferably chosen from the lithiated oxides of titanium, having the formula Li₄Ti₅O₁₂ or LiₓTiO₂.

4. Anode according to anyone of the preceding claims, **characterised in that** said at least one elastomer is a diene elastomer cross-linked with peroxide, preferably a hydrogenated nitrile rubber (HNBR).

5. Anode according to anyone of the preceding claims, **characterised in that** said at least one elastomer is present in said composition in a mass fraction between 1% and 10%.

6. Anode according to anyone of the preceding claims, **characterised in that** said at least one organic compound comprises a carbonate, preferably a carbonate of at least one olefin such as ethylene.

7. Anode according to anyone of the preceding claims, **characterised in that** said at least one organic compound is present in said composition in a mass fraction between 0.1% and 5%.

8. Anode according to anyone of the preceding claims, **characterised in that** said additives further comprise a cross-linking system that is present in said composition in a mass fraction between 0.05% and 0.20%, and that preferably comprises an organic peroxide and a cross-linking co-agent when said at least one elastomer is a diene elastomer such as a hydrogenated nitrile rubber (HNBR).

9. Anode according to anyone of the preceding claims, **characterised in that** said electrically conductive filler is chosen from the group consisting of carbon black, graphite, expanded graphite, carbon fibres, carbon nanotubes, graphene, and the mixtures thereof and is present in said composition in a mass fraction between 1% and 6%.

10. Method for manufacturing an anode according to anyone of the preceding claims, **characterised in that** said method comprises:
a) in an internal mixer or extruder, without any evaporation of solvent, melt-mixing of said active material and said additives comprising said binder and said organic compound in a solid state in order to obtain said composition in a cross-linkable state, this active material preferably comprising at least one compound or complex such as graphite or a lithiated oxide of titanium, and
b) cross-linking and optionally hot shaping of this composition in order to obtain said cross-linked composition,
and preferably **in that** step a) is carried out by mixing said binder with a pre-mixture of the other ingredients of the composition in a powder state, for example at a temperature between 80°C and 120°C, in an internal mixer.

11. Manufacturing method according to claim 10, **characterised in that** step b) is carried out by hot pressing said cross-linkable composition.

12. Manufacturing method according to claim 10 or 11, **characterised in that** said method then comprises a step c) of calendering said cross-linked composition in order to deposit said composition on a metal current collector provided in said anode.

13. Lithium-ion battery comprising at least one cell comprising an anode, a cathode and an electrolyte containing a lithium salt and a non-aqueous solvent, **characterised in that** said anode is as defined in one of claims 1 to 9, and preferably **in that** said electrolyte solvent comprises said at least one non-volatile organic compound of the anode.

14. Lithium-ion battery according to claim 13, **characterised in that** said anode comprises a metal current collector put in contact with at least one film consisting of said polymer composition.

15. Lithium-ion battery according to claim 13 or 14, **characterised in that** said cathode is based on an active material comprising at least one lithiated polyanionic compound or complex that has an operating voltage of less than 4V and is preferably coated with carbon, such as a lithiated phosphate of a metal M having the formula LiMPO₄, where M is for example an atom of iron.
